# EUROPÄISCHE PATENTSCHRIFT

(11) **EP 4 129 622 B1**
(45) Veröffentlichungstag und Bekanntmachung des Hinweises auf die Patenterteilung: **16.07.2025**
(21) Anmeldenummer: 22182173.9
(22) Anmeldetag: 30.06.2022
(51) Int. Cl.: B29C 48/91, B29C 48/88, B29C 48/92, B29C 67/20

(54) **SILIKONKAUTSCHUKGEMISCH ZUR HERSTELLUNG VON BAUTEILEN IM EXTRUSIONSVERFAHREN**
SILICONE RUBBER COMPOSITION FOR PRODUCING COMPONENTS BY EXTRUSION
MÉLANGE DE CAOUTCHOUC SILICONÉ DESTINÉ À LA FABRICATION DE COMPOSANTS SELON LE PROCÉDÉ D'EXTRUSION

(30) Priorität: 02.08.2021 DE 102021119977
(43) Veröffentlichungstag der Anmeldung: 08.02.2023
(73) Patentinhaber: Universität Kassel, 34125 Kassel (DE)
(72) Erfinder: GIESEN, Ralf-Urs, 34323 Beiseförth (DE); VERHEYEN, Fabian, 34117 Kassel (DE); HARTUNG, Michael, 34593 Knüllwald (DE); KLIER, Kevin, 34323 Malsfeld (DE); MARL, Svenja, 34117 Kassel (DE); RÜPPEL, Annette, 34212 Melsungen (DE); HICHRI, Sami, 34270 Schauenburg (DE); HEIM, Hans-Peter, 33332 Gütersloh (DE)
(74) Vertreter: Walther Bayer Faber Patentanwälte PartGmbB

(56) Entgegenhaltungen:
- EP-A1- 0 553 889
- EP-A1- 1 602 693
- EP-A1- 1 724 308

## Beschreibung

Die Erfindung betrifft einerseits die Verwendung eines Silikonkautschukgemisches zur Herstellung von Bauteilen im Extrusionsverfahren, wobei das Silikonkautschukgemisch im Gemisch verteilt eine Emulsion mit Wasser aufweist, wobei das Silikonkautschukgemisch zur Formgebung einem Extruder zugeführt wird. Andererseits ist Gegenstand der Erfindung eine Vorrichtung zur Herstellung von Silikonkautschukbauteilen.

Die Verwendung eines Silikonkautschukgemisches zur Herstellung von Bauteilen im Extrusionsverfahren ist aus dem Stand der Technik hinreichend bekannt. Beispielhaft sei hier nur verwiesen auf die EP 3 238 904 B1, die sich mit der Herstellung von geschäumten Silikonkautschukbauteilen unter Verwendung von Wasser beschäftigt. Der Vorteil dieses Verfahrens zur Herstellung von Silikonkautschukbauteilen unter Verwendung von Wasser besteht darin, dass Wasser in keiner Weise umweltschädlich ist. Dies ganz im Gegensatz zu sonst üblichen Treibmitteln, deren Umweltverträglichkeit häufig fragwürdig ist.

Die Druckschrift EP 1 602 693 A1 offenbart ein Verfahren zur Herstellung eines Silikonkautschuks, umfassend: eine erste Stufe, die den Schritt der Herstellung einer wässrigen Emulsion aus einem wasserlöslichen Polymer, einem fein pulverisierten Silika-Füllstoff, einem leitfähigen Füllstoff und einem nicht leitfähigen anorganischen Füllstoff, und den Schritt der Herstellung einer wässrigen Emulsion durch Rühren und Mischen der erhaltenen wässrigen Dispersion mit den folgenden Komponenten: einem Organopolysiloxan, das siliciumgebundene Alkenylgruppen enthält, einem Emulgator und einem Härtungsmittel; und eine zweite Stufe zur Gewinnung eines Silikongummis entweder durch Härten der in der ersten Stufe hergestellten wässrigen Emulsion unter Bildung eines nassen silikongummiartigen gehärteten Körpers und anschließendes Entfernen von Wasser aus dem Körper, oder durch Dehydratisierung und Aushärten der in der ersten Stufe hergestellten wässrigen Emulsion.

Silikonkautschuk ist teuer. Insofern ist man bestrebt sicherzustellen, dass die aus Silikonkautschuk hergestellten Bauteile, bei im Wesentlichen gleichen mechanischen Eigenschaften wie massive Bauteile, leichter sind. Insofern sind auch geschäumte Bauteile aus Silikonkautschuk bekannt.

Nun ist es so, dass nach dem Stand der Technik geschäumt hergestellte Bauteile aus Silikonkautschuk vielfach keine einheitliche Porenstruktur aufweisen. Vielmehr gibt es große und kleine Poren, die unregelmäßig im entsprechenden Silikonkautschukbauteil verteilt sind. Das heißt, die Bauteile sind an manchen Stellen weicher und an anderen Stellen, wo weniger und auch kleinere Poren zu finden sind, härter. Unterschiedliche mechanische Eigenschaften im Bauteil können jedoch in Abhängigkeit vom Einsatzzweck von Nachteil sein.

Die der Erfindung zugrunde liegende Aufgabe besteht demzufolge darin, hier Abhilfe zu schaffen. Insbesondere besteht die Aufgabe der Erfindung darin, ein geschäumtes Silikonbauteil bereitzustellen, das über sein gesamtes Volumen im Wesentlichen gleiche mechanische Eigenschaften aufweist. Zur Materialersparnis und somit aus Kostengründen soll es hierbei eine hohe Porosität aufweisen.

Zur Lösung der Aufgabe ist bei der Verwendung eines Silikonkautschukgemisches zur Herstellung von Bauteilen im Extrusionsverfahren, wobei das Silikonkautschukgemisch im Gemisch verteilt eine Emulsion mit Wasser aufweist, wobei das Silikonkautschukgemisch zur Formgebung einem Extruder zugeführt wird, vorgesehen, dass das Silikonkautschukgemisch nach Verlassen des Extruders als Rohbauteil eine Materialquerschnittsfläche von ≤ 1400 mm², vorzugsweise von ≤ 1200 mm² oder eine Materialdicke von 50 mm oder vorzugsweise von 40 mm aufweist, wobei zum Zwecke der schockartigen Verdampfung des Wassers der Emulsion das Rohbauteil in Abhängigkeit von der Größe der Querschnittsfläche oder der Materialdicke, in einem Tunnelofen mit zwei Abschnitten in einem ersten Abschnitt über einen Zeitraum von 10 bis 110 Sekunden, vorzugsweise von 20 bis 90 Sekunden, einer Temperatur von 180°C bis 250°C ausgesetzt ist.

Es hat sich herausgestellt, dass bei einer solchen schockartigen Erwärmung des Bauteils aus einem Silikonkautschukgemisch ein Bauteil mit hoher Porosität entsteht, wobei das maximale Porenvolumen von nahezu 85% der Poren zwischen 10 und 200.000 µm³ liegt. Durch die gleichmäßige Verteilung von ca. 85% von Poren ähnlichen oder nahezu gleichen Porenvolumens bestehen in einem solchen Bauteil im gesamten Bauteil nahezu die gleichen mechanischen Eigenschaften.

Erklärbar ist die gleichmäßige Verteilung der Poren und deren überwiegend ähnliches Porenvolumen dadurch, dass aufgrund der hohen Temperaturen die Verdampfung des Wassers explosionsartig und zur gleichen Zeit erfolgt in Bezug auf einen vorgebbaren Extrudatquerschnitt oder der Dicke. Aufgrund der Kürze der Verweildauer in einem Tunnelofen bei den angegebenen hohen Temperaturen, besteht auch nicht die Gefahr der Zersetzung der Struktur des Silikons.

Die gleichmäßige Verteilung der Poren wird aber auch durch die homogene Verteilung des Treibmittels Wasser mit Kieselsäure erreicht. Die Oberflächenstruktur der Kieselsäure begünstigt die Existenz einer sehr großen Anzahl von mikroskopisch kleinen Blasenkeimstellen. Je höher die Temperatur ist, der der Silikon ausgesetzt ist, desto mehr dieser Keimstellen werden tendenziell aktiviert und bilden Blasen oder auch Poren. In welchem Stadium des Wachstums die Porenstruktur fixiert wird, hängt maßgeblich von dem Zusammenspiel zwischen Verdampfung und Vernetzungsreaktion ab.

Vorteilhaft ist ebenfalls, wenn in einem Tunnelofen während der Erwärmung des Bauteils im ersten Abschnitt des Tunnelofens bereits eine Vernetzung im äußeren Bereich des Bauteils, beispielsweise einer Extrudatstange, stattfindet. Denn dies hat zur Folge, dass eine Formänderung auf der Außenmantelfläche durch z. B. Greif- oder Transporteinrichtungen kaum mehr stattfindet.

Vorteilhafte Merkmale und Ausgestaltungen der Erfindung ergeben sich aus den Unteransprüchen.

So ist beispielsweise vorgesehen, dass im Anschluss an die schockartige Erwärmung in einem ersten Abschnitt des Tunnelofens die Vernetzung des Silikonkautschukgemisches des im Extruder hergestellten Bauteiles in einem zweiten Abschnitt des Tunnelofens erfolgt. Die Vernetzung kann hierbei im Temperaturbereich von 90°C bis 250°C stattfinden, wobei je höher die Vernetzungstemperatur ist, desto kürzer ist die Verweildauer des Bauteils im zweiten Abschnitt des Tunnelofens, in dem die Vernetzung stattfindet. Die Zeitdauer für die Vernetzung des Silikonkautschuks des Bauteils ist auch abhängig davon, welche Vernetzungsmittel und in welcher Menge diese dem Gemisch zugegeben worden sind, und welche Materialquerschnittsfläche oder Materialdicke das Extrudat aufweist. Hierbei ist darauf zu achten, und zwar sowohl beim Vorgang der Porenbildung, wie oben beschrieben, als auch bei der Vernetzung, dass Temperatur und Verweildauer im Ofen so aufeinander abgestimmt sind, dass bei dem Vorgang der Porenbildung und auch bei der Vernetzung das gesamte Volumen des Bauteils betroffen ist. Grundsätzlich können anstelle eines Tunnelofens mit zwei Abschnitten auch zwei voneinander getrennte Einrichtungen Verwendung finden.

Es wurde bereits an anderer Stelle erläutert, dass das Silikonkautschukgemisch eine Emulsion aufweist, wobei die Emulsion als Gemisch vorteilhaft aus Wasser und Kieselsäure ausgebildet ist, bevor das Gemisch mit dem Silikonkautschuk vermischt wird.

Ebenfalls kann vorgesehen sein, dass das Kautschukgemisch Mittel zur Vernetzung aufweist, beispielsweise Peroxid, oder das Gemisch mit Platin vernetzt wird. Bekannt ist auch die Verwendung von Silanen als Vernetzungsmittel.

Ebenfalls können Additive im Silikonkautschukgemisch vorgesehen sein, um dem Kautschukgemisch die gewünschten Eigenschaften, beispielsweise hinsichtlich Farbgestaltung, mechanischen Eigenschaften (Reibungsreduzierung, Härte, Zugfestigkeit), Flammschutz, Hitzebeständigkeit, Medienbeständigkeit, vermitteln zu können.

Zur Erzeugung eines insbesondere geschlossenporigen Silikonkautschukbauteils beispielsweise mit einer Querschnittsfläche von 120 - 180 mm² bei einer schockartigen Erwärmung des Silikonkautschukgemisches auf > 100°C, insbesondere auf 180°C bis 250°C weist das Ausgangsgemisch insbesondere folgende Anteile auf: 100 phr Silikonkautschuk, 0,5 - 2 phr Vernetzer, 0 - 3 phr Wasser, 0 - 10 phr hydrophile, pyrogene Kieselsäure. Die Verweildauer im ersten Abschnitt des Tunnelofens beträgt zwischen 20 und 90 Sekunden. Hieraus wird deutlich, dass die Verweildauer und die Temperatur sich gegenseitig beeinflussen. Das heißt, hohe Temperaturen bedingen insofern niedrigere Verweilzeiten. Temperatur und Verweildauer sind auch abhängig von der Zusammensetzung des Silikonkautschukgemischs. Beispielhaft weist ein HCR [High Consistency Rubber] mit 2,4-Di-Chlor-Peroxid bei einer Temperatur im Tunnelofen von 180°C eine TC 90-Zeit , dass heißt, 90 % der Vernetzung ist abgeschlossen, von ca. 15 Sekunden auf. Wird das Di-Chlor-Peroxid durch Dicumylperoxid ersetzt, beträgt die Verweildauer im Tunnelofen, bei sonst gleichen Bedingungen, 90 Sekunden. Die Temperatur im Werkstück beträgt hierbei etwa 230° C.

Gegenstand der Erfindung ist ebenfalls eine Vorrichtung zur Herstellung von Silikonkautschukbauteilen hoher Porosität, wobei zur Herstellung eines Silikongemisches ein Mischer vorgesehen ist, dem ein Extruder nachgeschaltet ist, wobei das Extrudat aus dem Extruder einem Tunnelofen zu geführt wird, wobei dem Tunnelofen eine Vulkanisationseinrichtung nachgeordnet ist. Der Tunnelofen kann auch zwei Abschnitte aufweisen. Der erste Abschnitt dient der Porenbildung, der zweite Abschnitt der Vernetzung.

Erwärmt wird das Silikonbauteil im ersten und/oder auch im zweiten Abschnitt mit Infrarotstrahlung. Es hat sich gezeigt, dass mit Infrarotstrahlung im Wellenlängenbereich zwischen 3 und 50 µm im an anderer Stelle angegebenen Größenbereich des aus dem Extruder ausgegebenen Rohbauteils, das Rohbauteil von der Strahlung durchdrungen wird und somit das Rohbauteil über sein Volumen schockartig, also innerhalb kürzester Zeit, erwärmt wird, was zu einer gleichmäßigen Porenbildung über die gesamte Materialstärke oder Materialfläche führt. In dem ersten Abschnitt mit den hohen Temperaturen findet die Porenbildung statt, während im zweiten Abschnitt die Vulkanisation erfolgt. Erfindungsgemäß ist je Abschnitt eine IR-Strahlungsquelle vorgesehen oder auch mehrere Strahlungsquellen auf IR-Basis. Für die Vernetzung kann auch die Vulkanisation im Salzbad, mit der Mikrowelle oder im Heißlufttunnel erfolgen.

Nachfolgend an dem Tunnelofen kann eine Ablängungseinrichtung zur Erzeugung von Silikonkautschukbauteilen gleicher Länge oder Größe, sowie eine Tempereinrichtung vorgesehen sein. Das Tempern kann hierbei im Temperaturbereich von etwa 200°C für vier Stunden erfolgen.

Es wurde bereits erläutert, dass der Tunnelofen, und hier insbesondere ein als Durchlaufofen ausgebildeter Tunnelofen, im ersten Abschnitt eine Temperatur von 180°C bis 250°C aufweist. Im zweiten Abschnitt sind zur Vulkanisation Temperaturen zwischen 90°C und 250°C vorgesehen, die Zeitdauer zur Vulkanisation beträgt beispielsweise bei ca. 200°C 10 bis 30 Sekunden. Während des Temperns wird ggf. die Vulkanisation abgeschlossen, falls das noch nicht bei der Vulkanisation im Tunnelofen erfolgt ist.

Eine Erwärmung mittels IR-Strahlung im Bereich von 3-50 µm hat den Vorteil, dass sie das Bauteil aus Silikon so schnell durchdringt, und dass die Porenbildung quasi explosionsartig zur gleichen Zeit beginnt und etwa zur gleichen Zeit abgeschlossen ist. Das heißt aber auch, dass der Konvektionsanteil bei der Erwärmung verhältnismäßig gering ist.

Anhand der Zeichnung und den beiden Tabellen wird die Erfindung nachstehend beispielhaft näher erläutert.

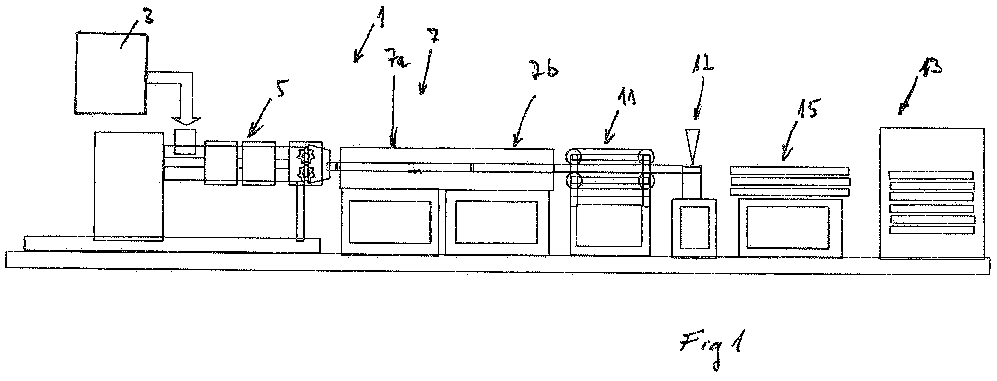

- Fig 1: zeigt die gesamte Vorrichtung schematisch;
- Fig. 2: zeigt eine Tabelle über die Porosität des fertigen Bauteils;
- Fig. 3: zeigt eine Tabelle über das Volumen der Poren und deren Menge am Gesamtvolumen der Poren.

Die in der Zeichnung dargestellte Vorrichtung zur Herstellung von Silikonkautschukbauteilen ist mit 1 bezeichnet. In einem Mischer 3 wird ein Strang mit einer Querschnittsfläche von ca. 165 mm² eines Silikonkautschukgemisches bei einer Raumtemperatur von ca. 20°C hergestellt. Das Silikonkautschukgemisch im Ausgangszustand stellt sich wie folgt dar: 100 phr Silikonkautschuk, 0,5 - 2 phr Vernetzer, 0 - 3 phr Wasser, 0 - 10 phr hydrophile, pyrogene Kieselsäure. Beispielmischung: Basepolymer Wacker Elastosil 401/60 + 1,5 phr 2,4-Dichlorbenzoylperoxid (DCLBP) + 1 phr hydrophile Kieselsäure + 1 phr Wasser. [Das kommerziell erhältliche Basepolymer Elastosil weist hierbei Silane und Kieselsäure auf.]

Der im Mischer erzeugte Strang wird einem Extruder 5 zugeführt wird, der wassergekühlt ist, um eine Vernetzung des Materials in dem Extruder zu vermeiden. Die Temperatur im Extruder 5 beträgt insofern maximal 50°C bis 60°C.

Dem Extruder 5 nachgeordnet ist ein sogenannter Tunnelofen 7 mit zwei Abschnitten 7a, 7b. In dem Abschnitt 7a herrscht eine Temperatur von ca. 100°C bis 180°C, bei einem Strang mit einer Querschnittsfläche von 165 mm². Die Verweildauer in dem ersten Abschnitt 7a des Tunnelofens beträgt bei dem Versuch bei 160°C bei 30 Sekunden. Die Oberflächentemperatur liegt bei 210°C des Strangs. In dem ersten Abschnitt im Tunnelofen findet die Porenbildung des Extrudats aus dem Extruder 5 statt, wie dies bereits an anderer Stelle beschrieben worden ist.

Der Tunnelofen 7 weist einen zweiten Abschnitt 7b auf, in dem die Vulkanisation erfolgt. Die Vulkanisation findet zwischen 90°C bei ca. 90 Sekunden und 250°C bei ca. 10 Sekunden statt. Im vorliegenden Beispiel fand die Vulkanisation bei 250°C über ca. 10 Sekunden statt.

Dem Tunnelofen 7 nachgeschaltet ist eine Abzugseinrichtung 11, bei der der Silikonkautschukstrang noch eine Temperatur von etwa 240°C aufweisen kann.

Abschließend wird das Silikonkautschukbauteil z. B. als Strang mit bestimmter Formgebung nach der Abzugseinrichtung 11 mit einer Ablängeinrichtung 12 auf Länge geschnitten und bei ca. 200°C über 4 Stunden in einer Tempereinrichtung 13 getempert. Vor dem Tempern kann die Konfektionierung (Pfeil 15) erfolgen. Im Bereich der Konfektionierung und der Ablängeinrichtung herrscht Raumtemperatur. Das heißt, das Tempern erfolgt aus der Raumtemperatur heraus. Hier wird das Bauteil ggf. noch vollständig vernetzt, falls dies im zweiten Abschnitt des Tunnelofens noch nicht geschehen ist.

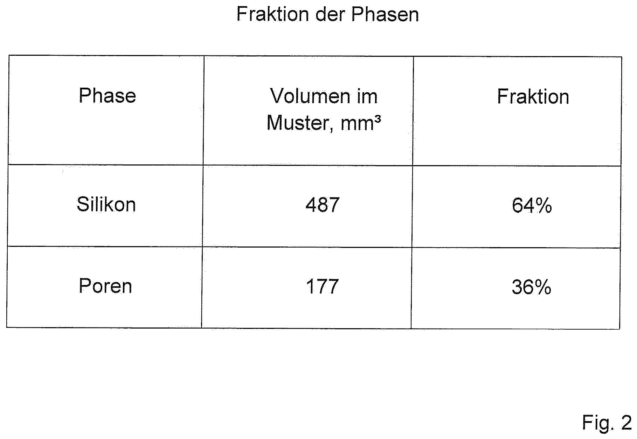

Aus Fig. 2 ergibt sich, dass die Porosität im vorliegenden Fall θ = 0,36 beträgt (wir sollten schon ausführen, wie man zu dem Wert von θ = 0,36 gelangt). Der Volumenanteil des Silikonformteils beträgt 487 mm³ und der Volumenanteil der Poren 117 mm³. Setze man beide Volumenanteile ins Verhältnis erhält man eine Porosität vom 0,36.

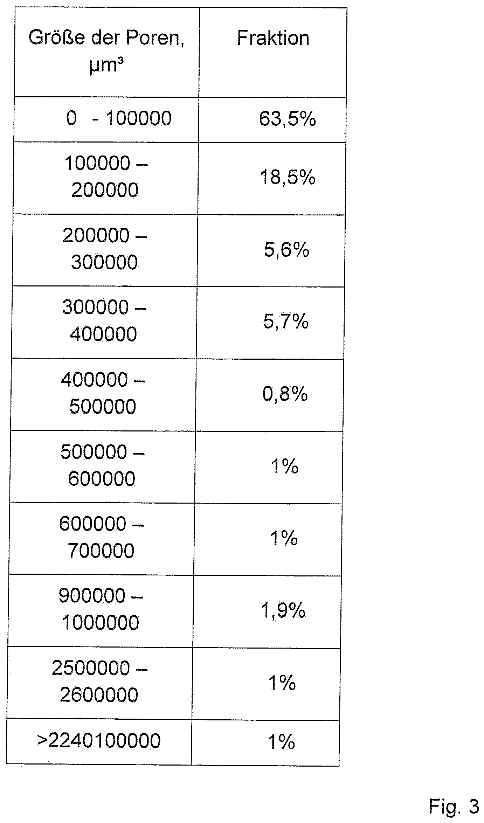

Die Größenverteilung und deren Anteil an dem gesamten Porenvolumen ergibt sich aus Fig. 3. Das heißt beispielsweise, dass Poren mit einem Volumen von 1 - 100.000 µm³ 64% des Gesamtvolumens der Poren von ca. 177 cm³ ausmachen.

### Bezugszeichenliste:

- 1: Vorrichtung zur Herstellung von Silikonkautschukbauteilen
- 3: Mischer
- 5: Extruder
- 7: Tunnelofen
- 7a: Erster Abschnitt (Porenbildung)
- 7b: Zweiter Abschnitt (Vulkanisation)
- 11: Abzugseinrichtung
- 12: Ablängeinrichtung
- 13: Tempereinrichtung
- 15: Pfeil

## Patentansprüche

1. Verwendung eines Silikonkautschukgemisches zur Herstellung von Silikonkautschukbauteilen im Extrusionsverfahren,
wobei das Silikonkautschukgemisch im Gemisch verteilt eine Emulsion mit Wasser aufweist,
wobei das Silikonkautschukgemisch zur Formgebung einem Extruder (5) zugeführt wird,
**dadurch gekennzeichnet,**
**dass** das Silikonkautschukgemisch nach Verlassen des Extruders (5) als Rohbauteil eine Materialquerschnittsfläche von ≤ 1400 mm², vorzugsweise von ≤ 1200 mm² oder eine Materialdicke von 50 mm oder vorzugsweise von 40 mm aufweist, wobei zum Zwecke der schockartigen Verdampfung des Wassers der Emulsion das Rohbauteil, in Abhängigkeit von der Größe der Querschnittsfläche, in einem Tunnelofen (7) mit zwei Abschnitten (7a, 7b) in einem ersten Abschnitt über einen Zeitraum von 10 bis 110 Sekunden, vorzugsweise über einen Zeitraum von 20 bis 90 Sekunden, einer Temperatur von 180°C bis 250°C ausgesetzt ist.

2. Verwendung eines Silikonkautschukgemisches zur Herstellung von Bauteilen im Extrusionsverfahren nach Anspruch 1,
**dadurch gekennzeichnet,**
**dass** im Anschluss an die Verdampfung des Wassers durch Erwärmung des Bauteils die Vernetzung des im Extruder (5) aus dem Silikonkautschukgemisches hergestellten Rohbauteils erfolgt.

3. Verwendung eines Silikonkautschukgemisches zur Herstellung von Bauteilen im Extrusionsverfahren nach Anspruch 2,
**dadurch gekennzeichnet,**
**dass** die Vernetzung unter der Zugabe von Vernetzungsmittel, z.B. Peroxid oder Silane erfolgt.

4. Verwendung eines Silikonkautschukgemisches zur Herstellung von Bauteilen im Extrusionsverfahren nach Anspruch 2 oder 3,
**dadurch gekennzeichnet,**
**dass** die Vernetzung im Temperaturbereich von 90°C bis 250°C für maximal 90 Sekunden erfolgt.

5. Verwendung eines Silikonkautschukgemisches zur Herstellung von Bauteilen im Extrusionsverfahren nach einem der voranstehenden Ansprüche,
**dadurch gekennzeichnet,**
**dass** die Emulsion Wasser und Kieselsäure aufweist.

6. Verwendung eines Silikonkautschukgemisches zur Herstellung von Bauteilen im Extrusionsverfahren nach Anspruch 5.
**dadurch gekennzeichnet,**
**dass** das Silikonkautschukgemisch neben Silikonkautschuk, einer Emulsion mit Kieselsäure und Wasser und Mitteln zur Vernetzung des Kautschuks, weitere Additive wie z. B. Farbe aufweist.

7. Verwendung eines Silikonkautschukgemisches zur Herstellung von Bauteilen im Extrusionsverfahren nach Anspruch 6,
**dadurch gekennzeichnet,**
**dass** das Silikonkautschukgemisch im Ausgangszustand folgende Bestandteile aufweist: 100 phr Silikonkautschuk, 0,5 - 2 phr Vernetzer, 0 - 3 phr Wasser, 0 - 10 phr hydrophile pyrogene Kieselsäure.

8. Vorrichtung zur Herstellung von Silikonkautschukbauteilen (1), wobei zur Herstellung eines Silikonkautschukbauteils gemäß einem oder mehrerer der Ansprüche 1 bis 7, ein Mischer (3) vorgesehen ist, dem ein Extruder (5) nachgeschaltet ist, wobei das Extrudat einem Tunnelofen (7) mit zwei Abschnitten (7a, 7b) zugeführt wird, wobei in dem ersten Abschnitt (7a) die Porenbildung stattfindet und in dem zweiten Abschnitt (7b) die Vulkanisation, und wobei der Tunnelofen (7) zur Erzeugung der erforderlichen Wärme je Abschnitt mindestens einen Infrarotstrahler aufweist, derart, dass der Tunnelofen (7) im ersten Abschnitt (7a) auf eine Temperatur von 180°C bis 250°C erwärmbar ist.

9. Vorrichtung zur Herstellung von Silikonkautschukbauteilen (1) nach Anspruch 8,
**dadurch gekennzeichnet,**
**dass** der zweite Abschnitt (7b) zur Vulkanisation auf eine Temperatur zwischen 90°C bis 250°C erwärmbar ist.

10. Vorrichtung zur Herstellung von Silikonkautschukbauteilen (1) nach Anspruch 8,
**dadurch gekennzeichnet,**
**dass** dem Tunnelofen (7) eine Tempereinrichtung (13) nachgeordnet ist.

11. Vorrichtung zur Herstellung von Silikonkautschukbauteilen (1) nach einem der Ansprüche 8 bis 10,
**dadurch gekennzeichnet,**
**dass** die Anordnung mehrerer Infrarotstrahler in dem Tunnelofen (7) vorgesehen ist, wobei die Anordnung der Infrarotstrahler so gewählt ist, dass das Silikonrohbauteil von allen Seiten bestrahlt wird.

12. Vorrichtung zur Herstellung von Silikonkautschukbauteilen (1) nach Anspruch 10 oder 11,
**dadurch gekennzeichnet,**
**dass** der oder die Infrarotstrahler in einem Wellenlängenbereich von 3 bis 50 µm arbeiten.

## Claims

1. Use of a silicone rubber mixture for the production of silicone rubber components by extrusion, where the silicone rubber mixture has an emulsion with water distributed in the mixture, where the silicone rubber mixture is fed to an extruder (5) for shaping,
**characterized in that**,
the silicone rubber mixture, after leaving the extruder (5) as a raw component, has a material cross-section area of ≤ 1400 mm², preferably ≤ 1200 mm², or a material thickness of 50 mm, or preferably 40 mm, where, for the purpose of the shock-like evaporation of the emulsion's water, the raw component is exposed to a temperature of 180 °C to 250 °C in a tunnel kiln (7) with two sections (7a, 7b), in the first section over a period from 10 to 110 seconds, preferably from 20 to 90 seconds, depending on the size of the cross-section area or the material thickness.

2. The use of a silicone rubber mixture for the production of silicone rubber components by extrusion according to claim 1,
**characterized in that**,
following the evaporation of the water, the crosslinking of the raw component produced from the silicone rubber mixture in extruder (5) takes place through the heating of the component.

3. The use of a silicone rubber mixture for the production of silicone rubber components by extrusion according to claim 2,
**characterized in that**,
the crosslinking takes place with the addition of crosslinking agents, such as peroxide or silanes.

4. The use of a silicone rubber mixture for the production of silicone rubber components by extrusion according to claim 2 or 3,
**characterized in that**,
the crosslinking take place in the temperature range from 90 °C to 250 °C for a maximum of 90 seconds.

5. The use of a silicone rubber mixture for the production of silicone rubber components by extrusion according to one of the previous claims,
**characterized in that**,
the emulsion has water and silica.

6. The use of a silicone rubber mixture for the production of silicone rubber components by extrusion according to claim 5,
**characterized in that**,
the silicone rubber mixture has, in addition to silicone rubber, an emulsion with silica and water, and agents for the crosslinking of the rubber, additional additives such as pigments.

7. The use of a silicone rubber mixture for the production of silicone rubber components by extrusion according to claim 6,
**characterized in that**,
the silicone rubber mixture in its initial state has the following components: 100 PhR silicone rubber, 0.5-2 PhR crosslinker, 0-3 PhR water, 0-10 PhR hydrophilic pyrogenic silica.

8. An apparatus for the production of silicone rubber components (1), where, for the production of a silicone rubber component according to one or more of claims 1 through 7, a mixer (3) is provided, followed by an extruder (5), where the extrudate is fed to a tunnel kiln (7) with two sections (7a, 7b), where the pore formation takes place in the first section (7a), and the vulcanization takes place in the second section (7b), and where the tunnel kiln (7) has at least one infrared radiator per section to generate the required heat, such that the tunnel kiln (7) can be heated to a temperature between 180 °C to 250 °C in first section (7a).

9. The apparatus for the production of silicone rubber components (1) according to claim 8,
**characterized in that**,
the second section (7b) for vulcanization, can be heated to a temperature between 90 °C to 250 °C

10. The apparatus for the production of silicone rubber components (1) according to claim 8,
**characterized in that**,
a tempering device (13) is arranged downstream from tunnel kiln (7).

11. The apparatus for the production of silicone rubber components (1) according to one of the claims 8 through 10,
**characterized in that**,
a plurality of infrared radiators are arranged in tunnel kiln (7), where the arrangement of the infrared radiators is chosen so that the silicone raw component is irradiated from all sides.

12. The apparatus for the production of silicone rubber components (1) according to claim 10 or 11,
**characterized in that**,
the infrared radiator or radiators operate in a wavelength range from 3 to 50 µm.

## Revendications

1. Utilisation d'un mélange de caoutchouc siliconé destiné à la fabrication de composants en caoutchouc siliconé selon un procédé d'extrusion,
dans laquelle le mélange de caoutchouc siliconé réparti dans le mélange présente une émulsion avec de l'eau,
dans laquelle le mélange de caoutchouc siliconé est amené à une extrudeuse (5) pour le façonnage,
**caractérisée en ce que** le mélange de caoutchouc siliconé, après avoir quitté l'extrudeuse (5) sous forme de pièce brute, présente une superficie de la section de la matière de ≤ 1400 mm², de préférence de ≤ 1200 mm², ou une épaisseur de matière de 50 mm ou de préférence de 40 mm, dans laquelle, dans le but d'une évaporation brutale de l'eau de l'émulsion, la pièce brute, en fonction de la taille de la superficie de la section, est exposée dans un four tunnel (7) à deux sections (7a, 7b) dans une première section pendant une période de 10 à 110 secondes, de préférence pendant une période de 20 à 90 secondes, à une température de 180 °C à 250 °C.

2. Utilisation d'un mélange de caoutchouc siliconé destiné à la fabrication de composants selon un procédé d'extrusion selon la revendication 1,
**caractérisée en ce que** suite à l'évaporation de l'eau par chauffage du composant, la réticulation de la pièce brute fabriquée dans l'extrudeuse (5) à partir du mélange de caoutchouc siliconé est effectuée.

3. Utilisation d'un mélange de caoutchouc siliconé destiné à la fabrication de composants selon le procédé d'extrusion selon la revendication 2,
**caractérisée en ce que** la réticulation est effectuée avec adjonction d'un agent de réticulation, par exemple du peroxyde ou du silane.

4. Utilisation d'un mélange de caoutchouc siliconé destiné à la fabrication de composants selon le procédé d'extrusion selon la revendication 2 ou 3,
**caractérisée en ce que** la réticulation est effectuée dans la plage de températures de 90 °C à 250 °C pendant un maximum de 90 secondes.

5. Utilisation d'un mélange de caoutchouc siliconé destiné à la fabrication de composants selon le procédé d'extrusion selon l'une quelconque des revendications précédentes,
**caractérisée en ce que** l'émulsion présente de l'eau et de l'acide silique.

6. Utilisation d'un mélange de caoutchouc siliconé destiné à la fabrication de composants selon le procédé d'extrusion selon la revendication 5,
**caractérisée en ce que** le mélange de caoutchouc siliconé présente en plus du caoutchouc siliconé, d'une émulsion avec de l'acide silique et de l'eau et des moyens de réticulation du caoutchouc, d'autres additifs comme par exemple une matière colorante.

7. Utilisation d'un mélange de caoutchouc siliconé destiné à la fabrication de composants selon le procédé d'extrusion selon la revendication 6,
**caractérisée en ce que** le mélange de caoutchouc siliconé présente à l'état initial les constituants suivants : 100 phr de caoutchouc siliconé, de 0,5 à 2 phr d'un réticulant, de 0 à 3 phr d'eau, de 0 à 10 phr d'acide silique pyrogéné hydrophile.

8. Dispositif de fabrication de composants de caoutchouc siliconé (1), dans lequel pour la fabrication d'un composant de caoutchouc siliconé selon une ou plusieurs des revendications 1 à 7, un mélangeur (3) est prévu qui est suivi en aval d'une extrudeuse (5), dans lequel l'extrudat est amené à un four tunnel (7) à deux sections (7a, 7b), dans lequel la formation de pores a lieu dans la première section (7a) et la vulcanisation a lieu dans la deuxième section (7b), et dans lequel le four tunnel (7), pour générer la chaleur nécessaire pour chaque section, présente au moins un émetteur infrarouge de telle sorte que le four tunnel (7) peut être chauffé dans la première section (7a) à une température de 180 °C à 250 °C.

9. Dispositif de fabrication de composants de caoutchouc siliconé (1) selon la revendication 8,
**caractérisé en ce que** la deuxième section (7b) peut être chauffée à une température comprise entre 90 °C à 250 °C pour la vulcanisation.

10. Dispositif de fabrication de composants de caoutchouc siliconé (1) selon la revendication 8,
**caractérisé en ce qu'**un dispositif de trempe (13) est placé en aval du four tunnel (7).

11. Dispositif de fabrication de composants de caoutchouc siliconé (1) selon l'une quelconque des revendications 8 à 10,
**caractérisé en ce que** l'agencement de plusieurs émetteurs infrarouges dans le four tunnel (7) est prévu, dans lequel l'agencement des émetteurs infrarouges est sélectionné de telle sorte que la pièce brute siliconée est irradiée de tous les côtés.

12. Dispositif de fabrication de composants de caoutchouc siliconé (1) selon la revendication 10 ou 11,
**caractérisé en ce que** le(s) émetteur(s) infrarouge(s) fonctionne(nt) dans une plage de longueurs d'onde de 3 à 50 µm.
